# DEMANDE DE BREVET EUROPEEN

(11) **EP 0 728 640 A1**
(43) Date de publication de la demande: **28.08.1996**
(21) Numéro de dépôt: 96102476.7
(22) Date de dépôt: 19.02.1996
(51) Int. Cl.: B60S 1/34

(54) **Essuie-glace pour véhicule automobile comportant une tête d'entraînement allégée**

(30) Priorité: 23.02.1995 FR 9502226
(71) Demandeur: VALEO SYSTEMES D'ESSUYAGE, 78321 La Verrière (FR)
(72) Inventeur: Rossinelli, Giordano, 86100 Chatellerault (FR)
(74) Mandataire: Gamonal, Didier

(57) **Abrégé**

L'invention propose un essuie-glace pour véhicule automobile du type comportant une tête d'entraînement (12) réalisée par moulage et qui comporte essentiellement une extrémité (20) de montage sur un arbre d'entraînement (14) en balayage alterné, une extrémité (22) pour l'articulation d'un bras porte-balais (16) et une partie centrale de liaison (24) qui relie longitudinalement les deux extrémités (20, 22), caractérisé en ce que la tête d'entraînement (12) comporte au moins un évidement (26) dans sa partie centrale de liaison (24).

## Description

L'invention concerne un essuie-glace pour véhicule automobile.

L'invention concerne plus particulièrement un essuie-glace pour véhicule automobile du type comportant une tête d'entraînement réalisée par moulage et qui comporte essentiellement une extrémité pour l'articulation d'un bras porte-balais, une extrémité de montage sur un arbre d'entraînement en balayage alterné, et une partie centrale de liaison qui relie longitudinalement les deux extrémités.

Afin de mieux les intégrer à la ligne du véhicule, les essuie-glaces sont fréquemment conçus pour être disposés le plus bas possible sur le pare-brise de manière à ce que, en position de repos, ils soient au moins en partie recouverts par le bord du capot avant du véhicule.

Cette nouvelle conception présente de nombreux avantages, dont ceux entre autres de favoriser une meilleure protection des essuie-glaces, d'améliorer l'écoulement aérodynamique dans la zone basse du parebrise lorsque le véhicule est en mouvement et de diminuer les protubérances inesthétiques.

Toutefois, les arbres d'entraînement étant ainsi rejetés loin du pare-brise, la tête d'entraînement des essuie-glaces est de plus en plus longue.

Cet accroissement des dimensions de la tête d'entraînement, dû aux contraintes géométriques et cinématiques, entraîne l'accroissement du poids et du volume de la tête d'entraînement.

L'augmentation de poids, outre qu'elle nécessite plus de matière, nécessite un dimensionnement supérieur du moteur d'entraînement des essuie-glaces.

De plus, la tête d'entraînement étant généralement réalisée par moulage, le refroidissement de pièces de plus en plus volumineuses nécessite des cycles de refroidissement plus longs et plus délicats à maîtriser afin d'éviter l'apparition de toutes contraintes internes dans le matériau et d'éviter tout phénomène métallurgique de ségrégation.

L'invention a pour but de proposer une conception d'une tête d'entraînement qui permet de réaliser une pièce de grandes dimensions présentant peu de zones massives.

Dans ce but, l'invention propose un essuie-glace pour véhicule automobile du type décrit précédemment, caractérisé en ce que la tête d'entraînement comporte au moins un évidemment dans sa partie centrale de liaison.

Selon d'autres caractéristiques de l'invention :
- l'évidement est oblong et longitudinal ;
- l'évidement est orienté selon un plan longitudinal médian de la tête d'entraînement ;
- l'évidement est un trou qui débouche dans deux faces supérieure et inférieure de la partie centrale de liaison qui sont sensiblement perpendiculaires à l'axe de l'arbre d'entraînement.

D'autres caractéristiques et avantages de l'invention apparaîtront à la lecture de la description détaillée qui suit pour la compréhension de laquelle on se reportera au dessin annexé dans lequel :
- La figure 1 est une vue de côté d'un essuie-glace pour véhicule automobile ;
- la figure 2 est une vue en perspective, partielle et plus détaillée, d'un essuie-glace conforme aux enseignements de l'invention.

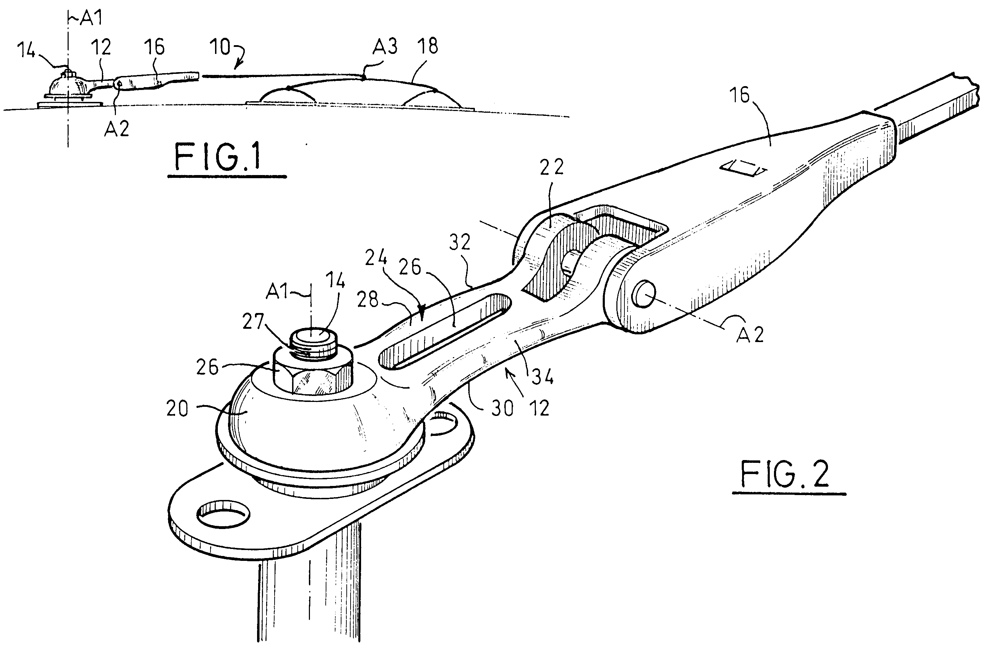

On a représenté sur la figure 1 un essuie-glace 10 pour véhicule automobile.

L'essuie-glace 10 comporte notamment une tête d'entraînement 12 qui est montée à l'extrémité d'un arbre 14 d'entraînement en balayage alterné de l'essuie-glace 10 autour d'un axe A1 sensiblement perpendiculaire au plan de la vitre à essuyer.

Sur la tête d'entraînement 12 est articulé, autour d'un axe A2 sensiblement perpendiculaire à l'axe A1, un bras porte-balais 16 à l'extrémité libre duquel un balai d'essuie-glace 18 est monté à rotation autour d'un axe A3 sensiblement parallèle à A2.

On a représenté sur la figure 2, de manière plus détaillée, une tête d'entraînement 12 qui comporte essentiellement une extrémité de montage 20, une extrémité d'articulation 22 du bras 16 et une partie centrale de liaison 24 qui relie longitudinalement les deux extrémités 20, 22.

L'extrémité de montage 20 de la tête d'entraînement 12 est reliée à l'arbre d'entraînement 14, par exemple grâce à des cannelures (non représentées) qui permettent l'entraînement en balayage alterné de la tête d'entraînement 12 autour de l'axe A1.

La tête d'entraînement 12 est fixée axialement grâce à un écrou 26 vissé sur l'extrémité filetée 27 de l'arbre 14.

Le bras porte-balais 16 est articulé autour de l'axe A2 sur l'extrémité d'articulation 22 de la tête d'entraînement 12 afin de pouvoir amener l'essuie-glace 10 d'une position de service à une position escamotée, par exemple pour permettre le démontage et le remplacement du balai d'essuie-glace 18.

Conformément aux enseignements de l'invention, la partie centrale de liaison 24 présente un trou oblong 26 dans sa partie médiane.

Le trou oblong 26 est percé entre deux faces supérieure 28 et inférieure 30 qui sont sensiblement perpendiculaires à l'axe A1 de l'arbre d'entraînement 14.

Le trou 26 s'étend longitudinalement entre les deux extrémités 20, 22 de la tête d'entraînement 12.

Il permet de réduire notablement le poids de la pièce sans en diminuer les caractéristiques mécaniques.

En effet, la tête d'entraînement 12 est essentiellement sollicitée en flexion autour de l'axe A1 et les contraintes mécaniques maximales se trouvent au niveau des faces latérales 32 et 34 de la tête d'entraînement 12.

La tête d'entraînement 12 est fabriquée de manière générale par moulage, en une seule pièce, par exemple en alliage d'aluminium.

On choisira donc les dimensions du trou oblong de manière à obtenir une résistance mécanique suffisante de la tête d'entraînement tout en essayant d'obtenir sur toute la pièce des épaisseurs constantes qui sont favorables au refroidissement de la pièce pendant sa fabrication en fonderie.

Pour ne pas trop diminuer la rigidité de la tête d'entraînement, on peut prévoir de remplacer l'évidement oblong par une série de trous de plus petites dimensions qui conféreront à l'âme de la pièce un aspect de treillis dont on sait que la résistance mécanique est importante

On peut également prévoir de réaliser la tête d'entraînement en matière plastique autour d'au moins un insert métallique formant l'âme de la pièce et comportant lui aussi un évidement, conformément aux enseignements de l'invention.

De manière connue, on pourra recouvrir la tête d'entraînement d'un cache (non représenté) qui dissimulera les moyens de fixation et le trou oblong.

## Revendications

1. Essuie-glace pour véhicule automobile du type comportant une tête d'entraînement (12) réalisée par moulage et qui comporte essentiellement une extrémité (20) de montage sur un arbre d'entraînement (14) en balayage alterné, une extrémité (22) pour l'articulation d'un bras porte-balais (16) et une partie centrale de liaison (24) qui relie longitudinalement les deux extrémités (20, 22), caractérisé en ce que la tête d'entraînement (12) comporte au moins un évidement (26) dans sa partie centrale de liaison (24).

2. Essuie-glace selon la revendication 1, caractérisé en ce que l'évidement (26) est oblong et longitudinal.

3. Essuie-glace selon la revendication 2, caractérisé en ce que l'évidement (26) est orienté selon un plan longitudinal médian de la tête d'entraînement (12).

4. Essuie-glace selon l'une quelconque des revendications 1 à 3, caractérisé en ce que l'évidement (26) est un trou qui débouche dans deux faces supérieure (28) et inférieure (30) de la partie centrale de liaison (24) qui sont sensiblement perpendiculaires à l'axe (A1) de l'arbre d'entraînement (14).
